# EUROPEAN PATENT SPECIFICATION

(11) **EP 4 446 623 B1**
(45) Date of publication and mention of the grant of the patent: **08.04.2026**
(21) Application number: 22907544.5
(22) Date of filing: 16.12.2022
(51) Int. Cl.: F16H 61/04, F16H 61/682, F16D 11/00, F16H 63/46, B60W 30/19, F16D 11/04, F16D 48/06

(54) **DOG CLUTCH TYPE TRANSMISSION DEVICE**
ÜBERTRAGUNGSVORRICHTUNG MIT KLAUENKUPPLUNG
DISPOSITIF DE TRANSMISSION DU TYPE À EMBRAYAGE À CRABOTS

(30) Priority: 17.12.2021 WO PCT/JP2021/046810
(43) Date of publication of application: 16.10.2024
(73) Proprietor: Yamaha Hatsudoki Kabushiki Kaisha, Shizuoka 4388501 (JP)
(72) Inventor: MINAMI, Kengo, Iwata-shi, Shizuoka 438-8501 (JP); TAMEMASA, Takuma, Iwata-shi, Shizuoka 438-8501 (JP)
(74) Representative: Stöckeler, Ferdinand
(86) International application number: PCT/JP2022/046493
(87) International publication number: WO 2023/113022

(56) References cited:
- JP-A- 2001 263 472
- JP-A- 2004 211 834
- US-A1- 2009 270 224
- US-A1- 2017 267 250

## Description

### TECHNICAL FIELD

The present invention relates to a dog clutch-type speed change device.

### BACKGROUND ART

Conventionally, there is a known speed change control device that includes a so-called dog-type transmission and performs a series of speed change actions by an actuator. Specifically, there is a known speed change control device that performs a series of speed change actions consisting of disconnecting a clutch, changing a gear position of a transmission, and connecting the clutch, by using an actuator, such as an electric motor.

In a speed change of a conventional dog clutch-type automatic transmission, a clutch is controlled from a fully connected state to a disconnected state when a speed change command is generated. When the clutch assumes the disconnected state, dog disengagement and dog engagement are performed, and after completion of the dog engagement, control is performed by which the clutch that has been in the disconnected state is gradually restored to the fully connected state. After completion of the dog engagement, it takes time for a clutch to undergo a state transition from the disconnected state to a partially connected state or the fully connected state, and a corresponding amount of driving-absent time occurs. There is a problem that the driving-absent time becomes prolonged.

Patent Literature 1 discloses a technology that, in a dog clutch-type automatic transmission, moves a clutch from a fully connected state to a half-connected performs dog disengagement by moving a clutch from a fully connected state to a disconnected state, and then performs dog engagement by moving the clutch to the disconnected state again via a partially connected state.

Patent Literature 3 discloses a technology that performs a downshift by double-clutching control. When a speed change order signal is given, a clutch is disconnected to perform gear release. The gear release is started at a position immediately after the clutch has entered a half-clutching region, and after the gear release, the clutch is temporarily connected. When a rotation of a dog gear has increased to a rotation at which gear-in is possible, the clutch is disconnected again and the gear-in is executed. The gear-in is started at a position immediately before the clutch has been thrown out, in other words, a position immediately before the clutch comes out of the half-clutching region. Patent Literature 4 discloses a variable speed control system including a multiple-speed transmission which changes a speed of an engine output in multiple stages based on a change in meshing state of a dog clutch which is caused in association with an operation of a change pedal connected mechanically, a pedal load detection device which detects an operation load of the change pedal, and a control unit which suppresses or shuts off an engine output to the multiple-speed transmission and permits a speed change action of the multiple-speed transmission by the change pedal when a detected pedal load exceeds a pedal load threshold.

### Citation List

### Patent Literature

[Patent Literature 1] Japanese Unexamined Patent Application Publication No. 2009-264519
[Patent Literature 2] Japanese Unexamined Patent Application Publication No. 2014-025496
[Patent Literature 3] Japanese Unexamined Patent Application Publication No. 2001-263472
[Patent Literature 4] United States Patent Application Publication No. 2017/267250 A

### SUMMARY OF THE INVENTION

### Technical Problem

In the automatic transmission disclosed in Patent Literature 1, since the clutch is not put in the disconnected state for dog disengagement, there is a problem that, for example, when a speed as well as a torque of a motive power source are low, simply restricting an output of a driving force of the motive power source and reducing an input clutch is not put in the disconnected state for dog disengagement, there is a problem that, for example, when a speed as well as a torque of a motive power source are low, simply restricting an output of a driving force of the motive power source and reducing an input torque to the transmission can hardly reduce an adhesive force between the dogs and does not allow smooth dog release. Another problem is that, if dog contact occurs when the speed of the motive power source is low, due to a low relative rotation speed of the dogs, the time until the dog contact dissolves becomes prolonged. In the automatic transmission disclosed in Patent Literature 2, since the clutch is in the disconnected state at a stage before completion of the dog engagement, there is a problem that it takes time until torque transmission to wheels starts after completion of the dog engagement, so that the driving force of the vehicle does not increase smoothly after the speed change.

In the automatic speed change device disclosed in Patent Literature 3, from the point when the dog engagement is started until the dog engaging action is completed, the clutch is shifted from the partially connected state to the disconnected state, and the clutch is in the disconnected state at the point when the dog engaging action is completed. Thus, there is a problem that it takes time until torque transmission to wheels starts after completion of the dog engagement, so that the driving force of the vehicle does not increase smoothly after the speed change.

The present invention has been developed to solve the problems with the above-described related art, and an object thereof is to provide a dog clutch-type speed change device that allows a driving force to increase at an early stage from a driving-force-absent state accompanying a speed change.

### Solution to Problem

The present invention is a dog clutch-type speed change device including: a clutch that is configured to, in a fully connected state, transmit a torque from a motive power source to a main shaft as a clutch friction member is pressed, in a partially connected state, transmit the torque as the clutch friction member is pressed with a pressing force lower than a pressing force in the fully connected state, and in a disconnected state, interrupt the torque transmission from the motive power source to the main shaft; a clutch actuator that is configured to control the clutch; a transmission that is configured to perform a speed change by causing a driving dog and a driven dog to be closer to and to be apart from each other so as to engage and disengage the driving dog and the driven dog with and from each other and thus switching gears that are configured to transmit a driving force between the main shaft and a drive shaft; a shift actuator that is configured to perform a speed change of the transmission; and a control device that is configured to control the clutch actuator and the shift actuator, wherein the control device is configured to control the clutch actuator and the shift actuator so as to perform, according to a speed change command for the transmission, an action of making the clutch transition from the fully connected state to the disconnected state via the partially connected state, and a dog disengaging action of disengaging the driving dog and the driven dog of a current stage of speed from each other, such that the dog disengaging action is completed with the clutch in the disconnected state, and to control the clutch actuator and the shift actuator so as to shift the clutch from the disconnected state to the partially connected state or the fully connected state while the driving dog and the driven dog of a next stage of speed are caused to be closer to each other from a disengaged state to an engaged state between a point when a dog engaging action of engaging the driving dog and the driven dog with each other is started and a point when the dog engaging action is completed, such that, at a point when the driving dog and the driven dog are engaged with each other, the torque is transmitted between the motive power source and the drive shaft through the clutch, the main shaft, the driving dog, and the driven dog.

In the above-described configuration, the control device may be configured to control at least the clutch actuator and the shift actuator so as to shift the clutch from the disconnected state to the partially connected state, and not to the fully connected state, while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source and the drive shaft through the clutch, the main shaft, the driving dog, and the driven dog.

In the above-described configuration, when driving states of the motive power source are defined as a high-speed, high-torque state in which a speed or an output torque of the motive power source is high, and a low-speed, low-torque state in which the speed or the torque is low compared with that in the high-speed, high-torque state, in a case where the driving state of the motive power source when an upshift command is generated is the low-speed, low-torque state or a case where the driving state of the motive power source when a downshift command is generated is a state of outputting a positive torque, the control device may be configured to control at least the clutch actuator and the shift actuator so as to shift the clutch from the disconnected state to the partially connected state or the fully connected state while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source and the drive shaft through the clutch, the main shaft, the driving dog, and the driven dog.

In the above-described configuration, the dog clutch-type speed change device may further include a motive power source-torque adjustment device that is configured to adjust the torque of the motive power source during a speed change, and the control device may be configured to control at least the clutch actuator, the shift actuator, and the motive power source-torque adjustment device.

In the above-described configuration, the control device may be configured to control the motive power source-torque adjustment device such that the motive power source outputs a positive torque while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source and the drive shaft through the clutch, the main shaft, the driving dog, and the driven dog.

In the above-described configuration, the control device may be configured to control the motive power source-torque adjustment device such that the torque that the motive power source outputs becomes a positive torque that is lower than the torque that the motive power source outputs when the upshift command is generated or when the downshift command is generated.

### Advantageous Effects of the Invention

According to the present invention, the dogs can be reliably disengaged, and the driving force of the vehicle can be smoothly increased after a speed change.

### BRIEF DESCRIPTION OF THE DRAWINGS

[FIG. 1] FIG. 1 is a view illustrating an overview of a dog clutch-type speed change device according to an embodiment.
[FIG. 2] FIG. 2 is a side view of a motorcycle according to the embodiment.
[FIG. 3] FIG. 3 is a sectional view showing the internal configuration of a power unit according to the embodiment.
[FIG. 4] FIG. 4 is a perspective view showing speed change gears constituting parts of a transmission according to the embodiment.
[FIG. 5] FIG. 5 is a control block diagram of the dog clutch-type speed change device according to the embodiment.
[FIG. 6] FIG. 6 is an explanatory view illustrating actions of disengaging a driving dog and a driven dog from each other and engaging the driving dog and the driven dog with each other.
[FIG. 7] FIG. 7 is an explanatory view illustrating a state when partial engagement between the driving dog and the driven dog has occurred.
[FIG. 8] FIG. 8 is a view showing transitions of a clutch command value, an actual clutch position, a required engine torque, a shift shaft angle, a shift cam angle, an engine speed, a main shaft rotation speed, a drive shaft rotation speed, and a rear-wheel driving force when a speed change command is generated.
[FIG. 9] FIG. 9 is a view showing transitions of the clutch command value, the actual clutch position, the required engine torque, the shift cam angle, and the rear-wheel driving force when a speed change command for a downshift is generated.

### MODES FOR CARRYING OUT THE INVENTION

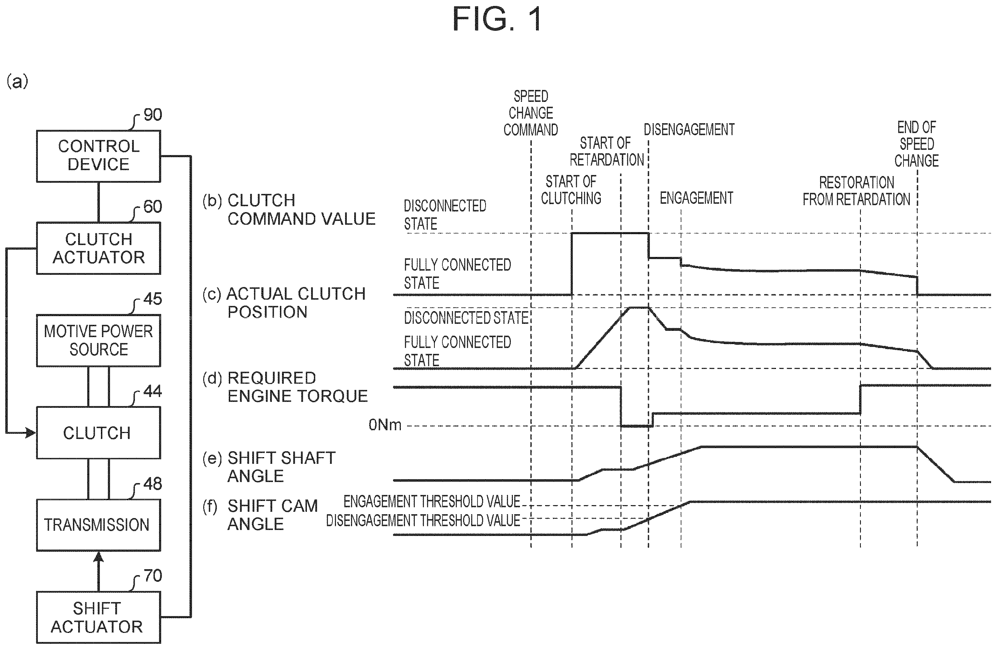

An embodiment of the present invention will be described below with reference to the drawings. FIG. 1 is a view illustrating an overview of a speed change action of a dog clutch-type speed change device according to the embodiment. As shown in FIG. 1 (a), the dog clutch-type speed change device has a clutch 44, a motive power source 45, a transmission 48, a clutch actuator 60, a shift actuator 70, and a control device 90.

A vehicle including the dog clutch-type speed change device travels on motive power of the motive power source 45. For example, the motive power source 45 is an internal combustion engine that uses gasoline as fuel. However, the type of the motive power source 45 is not particularly limited, and it may be a motor or the like other than an internal combustion engine such as a gasoline engine, or a gasoline engine and a motor may be combined to constitute a motive power source.

The dog clutch-type speed change device switches gears with different speed reduction ratios by the transmission 48. The transmission 48 is configured to switch gears that transmit a torque between a main shaft that rotates by receiving a torque from the motive power source 45 through the clutch 44 and a drive shaft that applies a driving torque to the vehicle. The gears include low-speed gears and high-speed gears. In the vehicle, an upshift of changing the speed from a low-speed gear to a high-speed gear, and a downshift of changing the speed from a high-speed gear to a low-speed gear are performed.

The clutch 44 is configured to transmit and interrupt the torque between the motive power source 45 and the main shaft. Connection states of the clutch 44 include a fully connected state, a partially connected state, and a disconnected state. When the clutch 44 is in the fully connected state, the torque is transmitted from the motive power source 45 to the main shaft as clutch friction members are pressed. When the clutch 44 is in the partially connected state, the torque is transmitted from the motive power source 45 to the main shaft as the clutch friction members are pressed with a pressing force that is lower than a pressing force when the clutch 44 is in the fully connected state. When the clutch 44 is in the disconnected state, the torque transmission from the motive power source 45 to the main shaft is interrupted.

During a speed change, the clutch actuator 60 is configured to switch the state of the clutch 44 to the fully connected state, the partially connected state, or the disconnected state. The shift actuator 70 is configured to switch the gears of the transmission 48. During a speed change, the control device 90 is configured to perform control of the clutch 44 through the clutch actuator 60 as well as perform control of the transmission 48 through the shift actuator 70.

Next, actions when the dog clutch-type speed change device performs a speed change will be described. The control device 90 performs, according to a speed change command for the transmission, an action of making the clutch 44 transition from the fully connected state to the disconnected state via the partially connected state, and a dog disengaging action of disengaging a driving dog and a driven dog of a current stage of speed from each other, and controls the clutch actuator 60 and the shift actuator 70. Specifically, upon receiving a speed change command, the control device 90 starts disconnection control of the clutch 44 after a predetermined time has elapsed since the generation of the speed change command (FIG. 1 (b)). During a period in which the clutch 44 shifts to the disconnected state, the control device 90 reduces a required engine torque to 0 Nm or a value close to 0 Nm. The control device 90 controls the clutch actuator 60 and the shift actuator 70 so as to perform a dog disengaging action of disengaging the driving dog and the driven dog of the current stage of speed from each other by moving the driving dog. Next, the control device 90 controls the clutch actuator 60 and the shift actuator 70 so as to shift the clutch 44 from the disconnected state to the partially connected state or the fully connected state while the driving dog and the driven dog of a next stage of speed are caused to be closer to each other from a disengaged state to an engaged state between a point when the dog engaging action of engaging the driving dog and the driven dog with each other is started and a point when the dog engagement is completed, such that, at the point when the driving dog and the driven dog are engaged with each other, the torque is transmitted between the motive power source 45 and the drive shaft through the clutch, the main shaft, the driving dog, and the driven dog. According to the dog clutch-type speed change device 50 of this embodiment, the dogs can be reliably disengaged, and a driving force can be smoothly increased after a speed change.

In the above-described embodiment, the control device 90 controls the clutch actuator 60 and the shift actuator 70 such that the action of making the clutch 44 transition from the fully connected state toward the disconnected state precedes the start of the disengaging action of the driving dog and the driven dog. However, the present invention is not limited to this. The clutch actuator 60 and the shift actuator 70 may be controlled such that the disengaging action of the driving dog and the driven dog precedes the action of making the clutch 44 transition from the fully connected state toward the disconnected state. Further, the clutch actuator 60 and the shift actuator 70 may be controlled such that the action of making the clutch 44 transition from the fully connected state toward the disconnected state and the disengaging action of the driving dog and the driven dog substantially coincide with each other. In the above-described embodiment, the control device 90 controls at least the clutch actuator 60 and the shift actuator 70 so as to shift the clutch 44 from the disconnected state to the partially connected state or the fully connected state while the driving dog and the driven dog are caused to be closer to each other from the disengaged state to the engaged state. However, the present invention is not limited to this. At least the clutch actuator 60 and the shift actuator 70 may be controlled so as to shift the clutch 44 from the disconnected state to the partially connected state, and not to the fully connected state, while the driving dog and the driven dog are caused to be closer to each other from the disengaged state to the engaged state, such that, at the point when the driving dog and the driven dog are engaged, the torque is transmitted between the motive power source 45 and the drive shaft through the clutch 44, the main shaft, the driving dog, and the driven dog. In the above-described embodiment, a speed change mechanism that changes the speed by moving the driving dog has been described, but a speed change mechanism that changes the speed by moving the driven dog may be adopted. When the driving dog and the driven dog that are engaged with each other in the current stage of speed are called a first driving dog and a first driven dog, and the driving dog and the driven dog that are engaged with each other in the next stage of speed are called a second driving dog and a second driven dog, a speed change mechanism that changes the speed by disengaging the first driving dog and the first driven dog from each other and engaging the second driving dog and the second driven dog with each other and thus switching the gears may be adopted.

Next, a vehicle equipped with the dog clutch-type speed change device 50 will be specifically described. Vehicles include, other than so-called four-wheel automobiles, snowmobiles, all-terrain vehicles (ATVs), and saddle-riding type automobiles such as motorcycles. While the type of vehicle is not particularly limited as long as the above-described speed change action is performed, in the following, the description will be continued by taking as an example a case where the vehicle is a motorcycle.

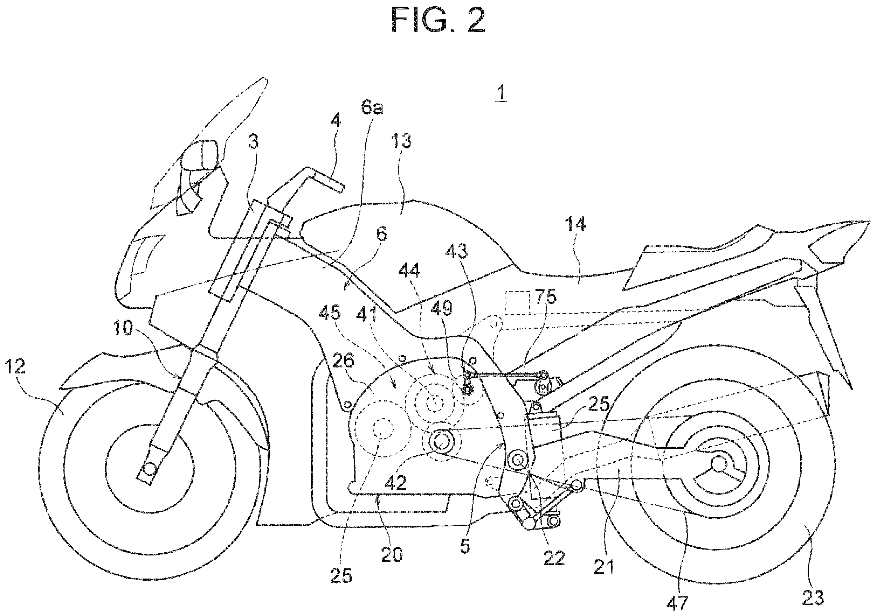

FIG. 2 is a side view showing a motorcycle 1. As shown in FIG. 2, the motorcycle 1 includes a head pipe 3 and a vehicle body frame 6. The vehicle body frame 6 has two frame parts 6a that are a left-right pair and extend rearward from the head pipe 3. In FIG. 2, only one of the frame parts 6a is shown. A rear portion of the frame part 6a extends downward and connects to a rear arm bracket 5. On the rear arm bracket 5, a front end portion of a rear arm 21 is supported through a pivot shaft 22 so as to be able to swing up and down. At a rear end portion of the rear arm 21, a rear wheel 23 is supported.

A front fork 10 is pivotably supported on the head pipe 3. At an upper end of the front fork 10, a steering handlebar 4 is provided, and at a lower end thereof, a front wheel 12 is rotatably provided. On upper portions of the frame parts 6a, a fuel tank 13 is disposed, and at a rear side of the fuel tank 13, a seat 14 is disposed.

A power unit 20 is suspended on the frame parts 6a and the rear arm bracket 5. The power unit 20 has at least the motive power source 45 (hereinafter referred to as an "engine 45"), the clutch 44, and the shift mechanism 43. The engine 45, the clutch 44, and the shift mechanism 43 are integrally incorporated in a crank case 26.

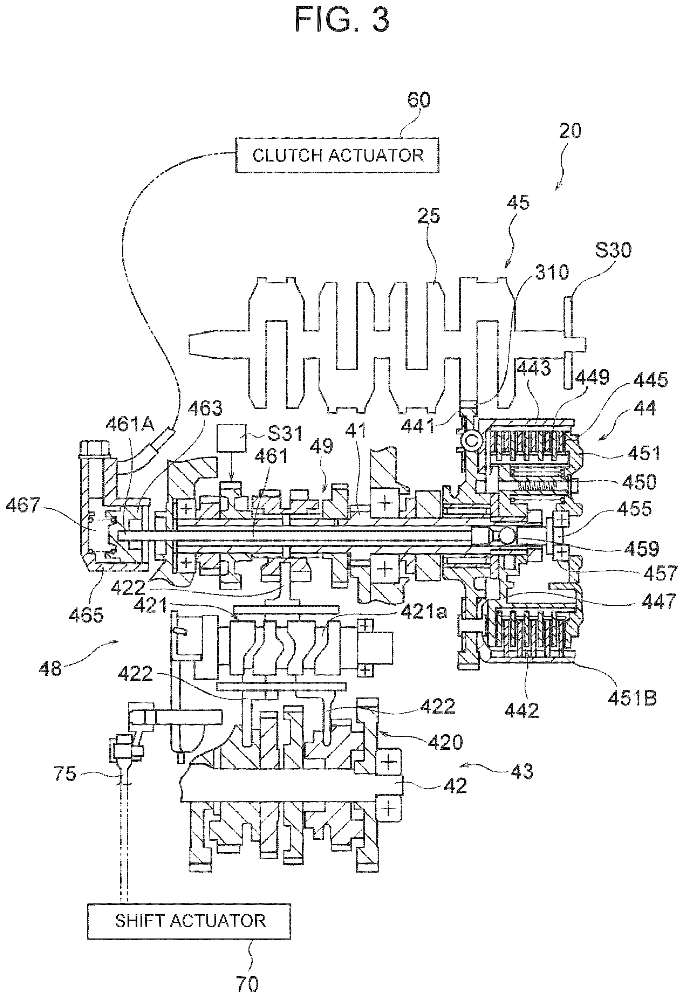

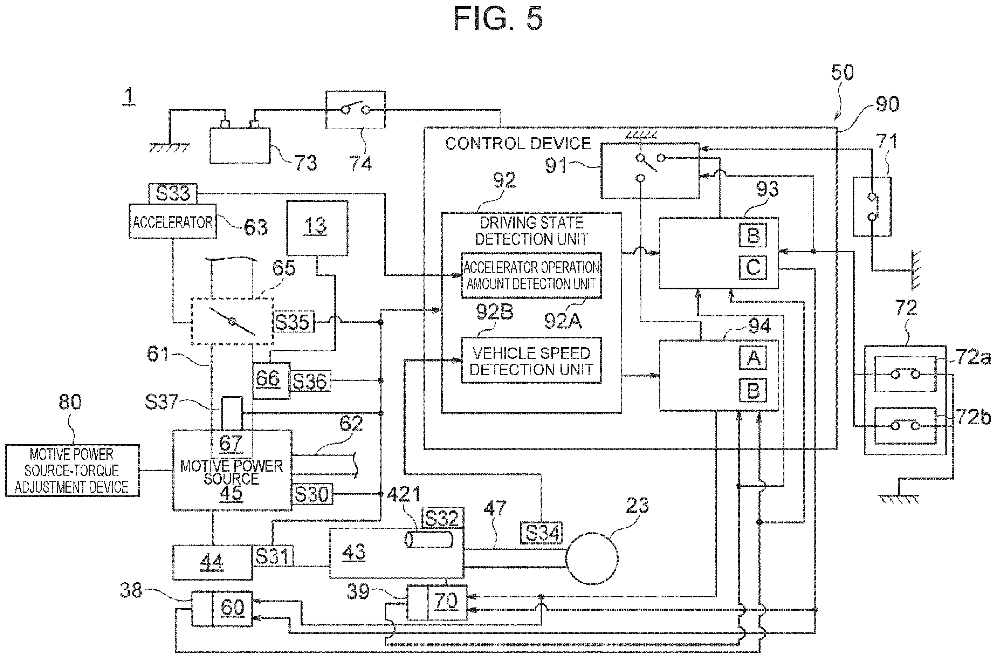

Next, the internal configuration of the power unit 20 will be described. FIG. 3 is a sectional view showing the internal configuration of the power unit 20. As shown in FIG. 3, the power unit 20 has the engine 45, the clutch 44, and the shift mechanism 43. The main shaft 41 is arranged parallel to the crankshaft 25. The drive shaft 42 is arranged parallel to the main shaft 41. The dog clutch-type speed change device 50 according to this embodiment includes the clutch 44, the shift mechanism 43, the clutch actuator 60, and the shift actuator 70 (see FIG. 5). As the clutch actuator 60 drives, the clutch 44 can be connected and disconnected. As the shift actuator 70 drives, switching of speed change gears of the shift mechanism 43, i.e., a change of a gear position of the shift mechanism 43 can be performed. The dog clutch-type speed change device 50 according to this embodiment includes a motive power source-torque adjustment device 80 that adjusts the torque of the engine 45 during a speed change (see FIG. 5). Further, the dog clutch-type speed change device 50 includes the control device 90 that executes control of the driving of the clutch actuator 60 and the shift actuator 70 as well as control of the motive power source-torque adjustment device 80.

The dog clutch-type speed change device 50 need not include separate actuators as the clutch actuator 60 and the shift actuator 70. That is, the dog clutch-type speed change device 50 may include an actuator that performs connection and disconnection of the clutch 44 as well as switching of the speed change gears of the shift mechanism 43. In this case, this actuator has the function of connecting and disconnecting the clutch 44 and the function of switching the speed change gears of the shift mechanism 43.

In the fully connected state, the clutch 44 according to this embodiment transmits the torque without slippage from the engine 45 to the main shaft 41 as the clutch friction members are pressed; in the partially connected state, it transmits the torque as the clutch friction members are pressed with a pressing force that is lower than a pressing force in the fully connected state; and in the disconnected state, it interrupts the torque transmission from the engine 45 to the main shaft 41. The clutch friction members include at least one of a driving-side clutch friction member (e.g., a friction disc or the like) that rotates integrally with a primary gear on a driven side of the clutch 44, and a driven-side clutch friction member (e.g., a clutch disc) or the like that integrally rotates with the main shaft 41. In the fully connected state of the clutch 44, the driving-side clutch friction member and the driven-side clutch friction member are pressed against each other by a clutch spring (not shown) and rotate integrally by a friction force occurring therebetween. The torque of the engine 45 is transmitted from the driving-side clutch friction member to the main shaft 41 through the driven-side clutch friction member. In the disconnected state of the clutch 44, the driving-side clutch friction member and the driven-side clutch friction member are separated from each other against an elastic force of the clutch spring, and pressing between the driving-side clutch friction member and the driven-side clutch friction member is eliminated. Then, the driven-side clutch friction member rotates idly relative to the driving-side clutch friction member, so that the torque transmission is interrupted. In the partially connected state of the clutch 44, the driving-side clutch friction member presses the driven-side clutch friction member with a pressing force lower than the pressing force in the fully connected state to transmit the torque. When making the clutch 44 shift toward the disconnection side, the clutch actuator 60 separates the driving-side friction member and the driven-side friction member from each other against the elastic force of the clutch spring so as to reduce the pressing force that has been acting therebetween. Generally, in a friction clutch, a driving-side friction member and a driven-side friction member are pressed with a pressing force according to a clutch position, and a torque according to this pressing force is transmitted through the friction clutch. Thus, the clutch position and the torque transmitted through the friction clutch are correlated with each other.

The clutch 44 is, for example, a multi-disc friction clutch, and includes a clutch housing 443 and a clutch boss 447. On an inner side of the clutch housing 443, a plurality of friction plates 445 each functioning as the driving-side clutch friction member is provided, and on an outer side of the clutch boss 447, a plurality of clutch plates 449 each functioning as the driven-side clutch friction member is provided. Each friction plate 445 is fixed on the clutch housing 443 with respect to a rotation direction of the main shaft 41. Therefore, the plurality of friction plates 445 rotates along with the clutch housing 443. Each friction plate 445 can change its position with respect to an axial direction of the main shaft 41.

The plurality of friction plates 445 is arrayed in the axial direction of the main shaft 41. Each clutch plate 449 faces each of adjacent friction plates 445. Each clutch plate 449 is fixed on the clutch boss 447 with respect to the rotation direction of the main shaft 41. Thus, the plurality of clutch plates 449 rotates along with the clutch boss 447. Each clutch plate 449 can change its position with respect to the axial direction of the main shaft 41.

In this embodiment, the plurality of friction plates 445 and the plurality of clutch plates 449 constitute a plate group 442.

As shown in FIG. 3, a pressure plate 451 is disposed outward of the main shaft 41 (on the right side in FIG. 3). The pressure plate 451 is formed in a substantially disc-like shape. At a radially outer-side part of the pressure plate 451, a pressing part 451B protruding toward the plate group 422 is formed. The pressing part 451B faces the friction plate 445 that is located farthest on the right side in the plate group 442.

The clutch 44 is provided with a spring 450. The spring 450 urges the pressure plate 451 inward (toward the left side in FIG. 3). That is, the spring 450 urges the pressure plate 451 in the direction in which the pressing part 451B presses the plate group 442.

A center part of the pressure plate 451 is engaged with one end portion of a push rod 455 (on the right side in FIG. 3) through a bearing 457. Thus, the pressure plate 451 is rotatable relative to the push rod 455. The main shaft 41 has a cylindrical shape. The other end portion (left end portion) of the push rod 455 is housed inside the main shaft 41. Inside the main shaft 41, a spherical ball 459 adjacent to the other end portion (left end portion) of the push rod 455 is provided. Further, inside the main shaft 41, a push rod 461 adjacent to the ball 459 is provided.

One end portion (left end portion) 461A of the push rod 461 protrudes from the main shaft 41. At the one end portion 461A of the push rod 461, a piston 463 is integrally provided. The piston 463 is guided by a cylinder main body 465 and is slidable in the axial direction of the main shaft 41.

When the clutch actuator 60 drives, a hydraulic fluid as a compressed fluid is supplied to a space 467 surrounded by the piston 463 and the cylinder main body 465. When the hydraulic fluid is supplied to the space 467, the piston 463 is pushed and moves in the rightward direction in FIG. 3. Thus, the piston 463 pushes the pressure plate 451 in the rightward direction in FIG. 3 through the push rod 461, the ball 459, the push rod 455, and the bearing 457. When the pressure plate 451 is pressed in the rightward direction in FIG. 3, the pressing part 451B of the pressure plate 451 separates from the friction plate 445, so that the clutch 44 assumes the disconnected state.

When connecting the clutch 44, the pressure plate 451 moves toward the left side in FIG. 3 by the spring 450. When the pressure plate 451 moves toward the left side in FIG. 3, the pressing part 451B presses the plate group 442 in the leftward direction. As a result, the friction plates 445 and the clutch plates 449 of the plate group 442 are brought into pressure-contact with each other. Thus, the clutch 44 assumes the fully connected state.

On the other hand, in the disconnected state of the clutch 44, the pressure plate 451 moves toward the right side in FIG. 3 by the push rod 455. Then, the pressing part 451B of the pressure plate 451 separates from the plate group 442. In the state where the pressing part 451B is separated from the plate group 442, each friction plate 445 and each clutch plate 449 are not in pressure-contact with each other, and there is a small gap formed between each friction plate 445 and each clutch plate 449. Therefore, a friction force that can transmit the driving force does not occur between each friction plate 445 and each clutch plate 449.

In this way, the pressure plate 451 moves in one direction or the other direction along the axial direction of the main shaft 41 according to which of the driving force of the clutch actuator 60 and the urging force of the spring 450 is larger. In accordance with this movement, the state of the clutch 44 transitions between the fully connected state and the disconnected state. Hereinafter, unless otherwise defined, the fully connected state represents a state where the torque is transmitted without slippage from the engine 45 to the main shaft 41 as the clutch friction members are pressed; the partially connected state represents a state where the torque is transmitted as the clutch friction members are pressed with a pressing force lower than the pressing force in the fully connected state; and the disconnected state represents a state where the torque transmission from the engine 45 to the main shaft 41 is interrupted.

A gear 310 is integrally supported on the crankshaft 25 of the engine 45. On the main shaft 41, a gear 441 that meshes with the gear 310 is supported. The gear 441 is rotatable relative to the main shaft 41. The gear 441 is integrally provided on, for example, the clutch housing 443. Thus, the torque of the engine 45 is transmitted from the crankshaft 25 to the clutch housing 443 through the gear 441. Further, the torque of the engine 45 is transmitted from the clutch housing 443 to the clutch boss 447 by the friction force occurring between the plurality of friction plates 445 and the plurality of clutch plates 449. The clutch boss 447 and the main shaft 41 rotate integrally. That is, there is no relative rotation between the clutch boss 447 and the main shaft 41. Therefore, when the clutch 44 is connected, the torque of the engine 45 is transmitted to the main shaft 41.

The push rod 455 is not limited to the one that pushes the pressure plate 451 toward the right side in FIG. 3 by a mechanism inserted inside the main shaft 41. The push rod 455 may be one that pulls the pressure plate 451 toward the right side in FIG. 3 by a mechanism provided outside the pressure plate 451 (on the right side in FIG. 3).

The clutch 44 may be a single-disc clutch instead of a multi-disc clutch. The clutch 44 may include a centrifugal weight. In this case, the clutch 44 is connected and disconnected based on the driving of the clutch actuator 60 and a centrifugal force of the centrifugal weight. The clutch may be a hydraulic type. The connection and disconnection of the clutch are controlled through a hydraulic pressure, and specifically, the clutch pressing force can be controlled through a hydraulic pressure generated by a clutch actuator using a hydraulic solenoid. Thus, the friction force occurring between the plurality of friction plates 445 and the plurality of clutch plates 449 constituting parts of the clutch can be controlled through a hydraulic pressure.

Subsequently, the detailed configuration of the shift mechanism 43 will be described. The shift mechanism 43 according to this embodiment is a so-called dog-type shift mechanism.

In the power unit 20, an engine speed sensor S30 is provided on the crankshaft 25. The engine speed sensor S30 detects a rotation speed of the crankshaft 25. The crankshaft 25 is coupled to the main shaft 41 through the clutch 44. A main shaft rotation speed sensor S31 is provided on the main shaft 41. The main shaft rotation speed sensor S31 detects a rotation speed of the main shaft 41.

On the main shaft 41, multi-stage speed change gears 49 are mounted. On the other hand, on the drive shaft 42, a plurality of speed change gears 420 corresponding to the multi-stage speed change gears 49 is mounted. Of the multi-stage speed change gears 49 and the plurality of speed change gears 420, only one selected pair of gears mesh with each other. At least either the speed change gears 49 other than the selected speed change gear 49 among the multi-stage speed change gears 49 or the speed change gears 420 other than the selected speed change gear 420 among the plurality of speed change gears 420 are rotatable relative to the main shaft 41 or the drive shaft 42. That is, at least either the speed change gears 49 that are not selected or the speed change gears 420 that are not selected rotate idly relative to the main shaft 41 or the drive shaft 42. Transmission of rotation between the main shaft 41 and the drive shaft 42 is performed through only the selected speed change gear 49 and the selected speed change gear 420 that mesh with each other.

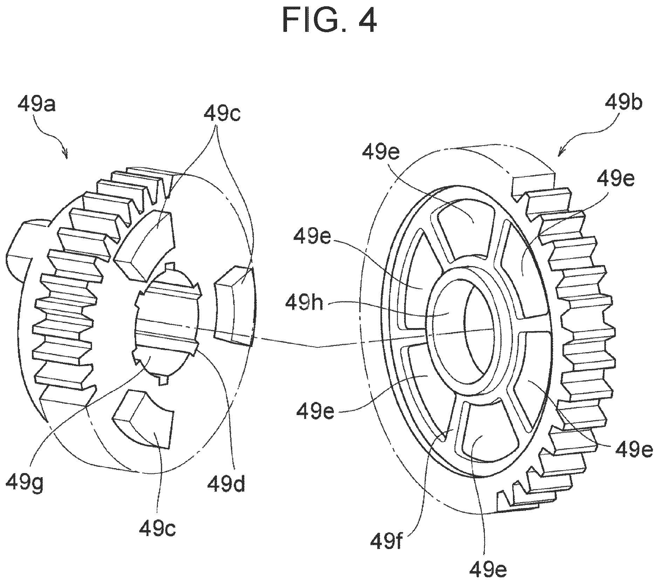

The specific configuration of the speed change gears 49 will be described using FIG. 4. While FIG 4 shows the configuration of the speed change gears 49, the configuration of the speed change gears 420 is similar and therefore description thereof will be omitted.

As the speed change gears 49, a first gear 49a in which engaging protrusions 49c are formed as a driving dog on an axial end surface, and a second gear 49b in which engaging recesses 49e are formed as a driven dog in an axial end surface facing the engaging protrusions 49c are included. The shift mechanism 43 includes pluralities of first gears 49a and second gears 49b, with each first gear 49a disposed between one pair of second gears 49b. In the first gear 49a, three engaging protrusions 49c are formed, and these engaging protrusions 49c are disposed evenly in a circumferential direction at an outer edge portion of the axial end surface of the first gear 49a. In the second gear 49b, six engaging recesses 49e are formed, and these engaging recesses 49e are also evenly disposed in a circumferential direction.

At an axial center part of the first gear 49a, an insertion hole 49g through which the main shaft 41 and the drive shaft 42 are inserted is formed, and a plurality of grooves 49d is formed in a circumferential surface of the insertion hole 49g. The first gear 49a is spline-fitted on the main shaft 41 and the drive shaft 42. On the other hand, an insertion hole 49h through which the main shaft 41 and the drive shaft 42 are inserted is formed in the second gear 49b, but no groove is formed in this insertion hole 49h. Thus, the second gear 49b is mounted on the main shaft 41 and the drive shaft 42 in an idly rotatable state.

As a shift cam 421 (see FIG. 3) rotates, a shift fork 422 moves along a cam groove 421a, and in conjunction with this, the first gear 49a moves in the axial direction along splines of the main shaft 41 and the drive shaft 42. As the engaging protrusions 49c of the first gear 49a engage in the engaging recesses 49e of the second gear 49b, the combination of the speed change gears 49, 420 that transmit the driving force from the main shaft 41 to the drive shaft 42 is switched, and thus a gear change is performed. The transmission 48 is formed by these speed change gears 49, 420 and the shift cam 421.

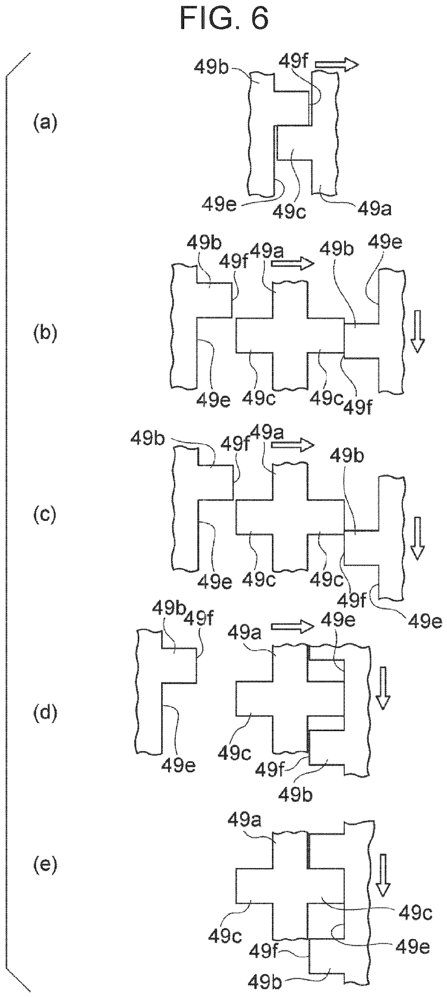

Next, states of the driving dog and the driven dog during switching of the gears in the speed change gears 49 will be described. FIG. 6 is an explanatory view illustrating actions of disengaging the driving dog and the driven dog from each other and engaging the driving dog and the driven dog with each other.

FIG. 6 (a) is a view showing a state when the first gear 49a is engaged with one second gear 49b. When the first gear 49a and the second gear 49b are engaged with each other, the engaging protrusions 49c of the first gear 49a are in contact with inner surfaces of the engaging recesses 49e of the second gear 49b in a state where the engaging protrusions 49c have entered deep inside the engaging recesses 49e. In this case, the driving force is transmitted from the main shaft 41 to the drive shaft 42. When performing a gear change from this state, the shift cam 421 (see FIG. 3) rotates and causes the first gear 49a to move in the rightward direction in FIG. 6 (a), so that the engaging protrusions 49c of the first gear 49a come out of the engaging recesses 49e of the second gear 49b as shown in FIG. 6 (b). This is called dog disengagement. When the first gear 49a moves further in the rightward direction in FIG. 6 (a), the engaging protrusions 49c of the first gear 49a come into contact with an axial end surface 49f of another second gear 49b disposed adjacently. This is called dog contact.

Since the second gear 49b is rotating relative to the first gear 49a as shown in FIG. 6 (b), when the engaging protrusions 49c of the first gear 49a are no longer in contact with the axial end surface 49f of the second gear 49b as shown in FIG. 6 (c), the engaging protrusions 49c of the first gear 49a enter the engaging recesses 49e of the second gear 49b as shown in FIG. 6 (d). This is called dog engagement. When the second gear 49b rotates further relative to the first gear 49a, the engaging protrusions 49c of the first gear 49a come into contact with the inner surfaces of the engaging recesses 49e of the second gear 49b as shown in FIG. 6 (e). Thus, the first gear 49a engages with another second gear 49b, so that the driving force is transmitted from the main shaft 41 to the drive shaft 42.

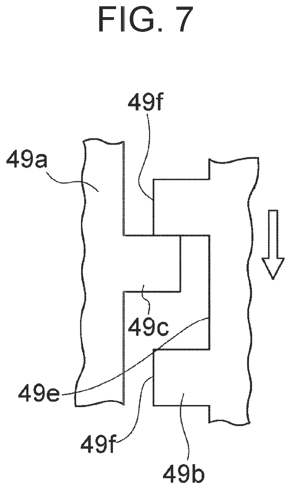

When the first gear 49a moves in the axial direction as the shift cam 421 (see FIG. 3) rotates, the engaging protrusions 49c of the first gear 49a may come into contact with the inner surfaces of the engaging recesses 49e of the second gear 49b in a state of not having completely entered the engaging recesses 49e of the second gear 49b as shown in FIG. 7. This state is called half-meshing of dogs. In this case, the engaging protrusions 49c of the first gear 49a cannot be made to enter deep inside the engaging recesses 49e of the second gear 49b unless the torque of the engine 45 is reduced and an adhesive force (load) between the engaging protrusions 49c of the first gear 49a and the engaging recesses 49e of the second gear 49b is removed.

Selection of the speed change gear 49 or the speed change gear 420 is performed by the shift cam 421. A plurality of cam grooves 421a is formed in an outer circumferential surface of the shift cam 421. One shift fork 422 is mounted in each cam groove 421a. Each shift fork 422 is engaged with predetermined speed change gear 49 and speed change gear 420 of the main shaft 41 and the drive shaft 42, respectively. As the shift cam 421 rotates, each of the plurality of shift forks 422 is guided by the cam groove 421a so as to move in the axial direction of the main shaft 41. Thus, gears that mesh with each other among the speed change gears 49 and the speed change gears 420 are selected. Specifically, among the pluralities of speed change gears 49 and speed change gears 420, only one pair of gears at a position corresponding to a rotation angle of the shift cam 421 enters a state of being fixed on the main shaft 41 and the drive shaft 42, respectively, by the splines. Thus, the gear position in the shift mechanism 43 is determined. As a result, transmission of rotation is performed at a predetermined gear ratio between the main shaft 41 and the drive shaft 42 through the speed change gear 49 and the speed change gear 420.

The shift cam 421 rotates by a predetermined angle as a shift rod 75 moves reciprocatingly. The shift rod 75 moves reciprocatingly as the shift actuator 70 drives.

Owing to the configuration as has been described above, when the engine 45 is driven with the predetermined pair of speed change gear 49 and speed change gear 420 fixed on the main shaft 41 and the drive shaft 42, respectively, and the clutch 44 put in the fully connected state, the torque of the engine 45 is transmitted to the main shaft 41 through the clutch 44. Transmission of rotation is performed at a predetermined gear ratio between the main shaft 41 and the drive shaft 42 through the predetermined pair of speed change gear 49 and the speed change gear 420, and the drive shaft 42 rotates. When the drive shaft 42 rotates, the torque is transmitted by a power transmission mechanism 47 (see FIG. 1) that connects the drive shaft 42 and the rear wheel 23 (see FIG. 1) to each other, and the rear wheel 23 rotates.

Next, the dog clutch-type speed change device 50 according to this embodiment will be described. FIG. 5 is a control block diagram of the dog clutch-type speed change device 50. As shown in FIG. 5, the dog clutch-type speed change device 50 includes the shift mechanism 43, the clutch 44, the clutch actuator 60, the shift actuator 70, and the control device (electric control unit) 90. The control device 90 has a switching determination unit 91, a driving state detection unit 92, a semi-automatic control unit 93, and a fully automatic control unit 94. While the embodiment in which the control device 90 is composed of one unit has been described, the control device 90 may be composed of one unit or may be composed of a plurality of units.

The motorcycle 1 includes a power source device 73 and a main switch 74. When the main switch 74 is operated by an occupant of the motorcycle 1, the power source device 73 and the control device 90 become electrically continuous with each other and the control device 90 becomes operable. In this regard, the motorcycle 1 may include a relay switch or the like (not shown). In this case, part of the control device 90 can operate also when the main switch 74 is not operated.

As described above, in the power unit 20 (see FIG. 1), the engine speed sensor S30 is provided on the crankshaft 25 (see FIG. 3). In FIG. 5, the engine speed sensor S30 is adjacent to the engine 45. On the main shaft 41 (see FIG. 3), the main shaft rotation speed sensor S31 is provided. In FIG. 5, the main shaft rotation speed sensor S31 is adjacent to the clutch 44.

The motorcycle 1 includes an intake pipe 61, an exhaust pipe 62, an accelerator 63, a throttle valve 65, a fuel supply device 66, and an ignition device 67. The intake pipe 61 connects to the engine 45. The exhaust pipe 62 connects to the engine 45 at a position different from a position at which the intake pipe 61 connects thereto. The throttle valve 65 is provided inside the intake pipe 61. The throttle valve 65 adjusts an amount and a speed of air flowing through the intake pipe 61. The fuel supply device 66 is provided at an intermediate point in the intake pipe 61. The fuel supply device 66 may be a so-called carburetor or may be a fuel injection device. The fuel supply device 66 supplies fuel stored in the fuel tank 13 to the inside of the intake pipe 61. Further, the ignition device 67 is provided inside the engine 45. In this embodiment, an ignition timing of the ignition device 67 is electronically controlled. However, the ignition timing of the ignition device 67 may be mechanically controlled.

An opening degree of the throttle valve 65 changes based on an amount of pressing on the accelerator 63. As the opening degree of the throttle valve 65 changes, the amount of air passing through the intake pipe 61 changes. However, the opening degree of the throttle valve 65 may be electronically controlled.

The motorcycle 1 includes an accelerator operation amount sensor S33, a throttle position sensor S35, a fuel supply amount sensor S36, an ignition timing sensor S37, a shift position sensor S32, and a vehicle speed sensor S34. The accelerator operation amount sensor S33 detects the amount of pressing on the accelerator 63 as an operation amount. The throttle position sensor S35 detects the opening degree of the throttle valve 65. The fuel supply amount sensor S36 detects a fuel supply amount in the fuel supply device 66. The ignition timing sensor S37 detects a timing of igniting an air-fuel mixture in the ignition device 67. The shift position sensor S32 detects the gear position of the shift mechanism 43 by detecting the rotation angle of the shift cam 421 (see FIG. 3). The vehicle speed sensor S34 detects a vehicle speed of the motorcycle 1. These sensors may detect the respective amounts of shift directly or indirectly, and may have an arithmetic operation function and calculate required physical amounts from predetermined physical amounts.

Further, the dog clutch-type speed change device 50 includes a potentiometer 38 that detects a driving amount of the clutch actuator 60, and a potentiometer 39 that detects a driving amount of the shift actuator 70. Particularly, the potentiometer 38 detects a rotation angle of the clutch actuator 60. The potentiometer 39 detects a rotation angle of the shift actuator 70. However, in the case where the dog clutch-type speed change device 50 includes an actuator that has both the function as the clutch actuator 60 and the function as the shift actuator 70 as described above, the dog clutch-type speed change device 50 need not include the two potentiometers of the potentiometer 38 and the potentiometer 39.

The driving state detection unit 92 of the control device 90 detects a driving state of the motorcycle 1 by detection values of the above-described sensors. That is, the driving state detection unit 92 receives an input of a signal based on the operation amount of the accelerator 63 from the accelerator operation amount sensor S33. The driving state detection unit 92 thereby detects the amount of operation of the accelerator 63.

The driving state detection unit 92 receives an input of a signal based on the opening degree of the throttle valve 65 from the throttle position sensor S35. The driving state detection unit 92 thereby detects the opening degree of the throttle valve 65. The driving state detection unit 92 receives an input of a signal based on the fuel supply amount of the fuel supply device 66 from the fuel supply amount sensor S36. The driving state detection unit 92 thereby detects the fuel supply amount in the fuel supply device 66. The driving state detection unit 92 receives an input of a signal based on the ignition timing of the ignition device 67 from the ignition timing sensor S37. The driving state detection unit 92 thereby detects the ignition timing of the ignition device 67. The driving state detection unit 92 receives an input of a signal based on the rotation speed of the crankshaft 25 from the engine speed sensor S30. The driving state detection unit 92 thereby detects the rotation speed of the crankshaft 25. The driving state detection unit 92 receives an input of a signal based on the rotation speed of the main shaft 41 from the main shaft rotation speed sensor S31. The driving state detection unit 92 thereby detects the rotation speed of the main shaft 41. The driving state detection unit 92 receives an input of a signal based on the rotation angle of the shift cam 421 from the shift position sensor S32. The driving state detection unit 92 thereby detects the current gear position in the shift mechanism 43. The driving state detection unit 92 receives an input of a signal based on the vehicle speed of the motorcycle 1 from the vehicle speed sensor S34. The driving state detection unit 92 thereby detects the vehicle speed of the motorcycle 1.

In the dog clutch-type speed change device 50, the speed change action is performed as the clutch actuator 60 and the shift actuator 70, or only the shift actuator 70 drives. The speed change action of the dog clutch-type speed change device 50 is a series of actions consisting of disconnecting the clutch 44, changing the gear position of the shift mechanism 43, and connecting the clutch 44.

In the dog clutch-type speed change device 50, control can be executed in which a rider of the motorcycle 1 orders the above-described speed change action to start and the series of speed change actions is automatically performed. This control is control in which the driving of the clutch actuator 60 and the shift actuator 70 is started according to operation of the shift switch 72 (see FIG. 5 etc.) by the rider of the motorcycle 1. This control will be referred to as semi-automatic control Sc. In the dog clutch-type speed change device 50, control can be executed in which the series of speed change actions is automatically performed according to the driving state of the motorcycle 1, regardless of the intention of the rider of the motorcycle 1. This control is control in which the driving of the clutch actuator 60 and the shift actuator 70 is started according to detection of the driving state by the driving state detection device. This control will be referred to as fully automatic control Fc.

The dog clutch-type speed change device 50 according to this embodiment is configured to be able to switch between the semi-automatic control Sc and the fully automatic control Fc. Specifically, the control device 90 has the semi-automatic control unit 93 and the fully automatic control unit 94. The semi-automatic control unit 93 executes the semi-automatic control Sc. The fully automatic control unit 94 executes the fully automatic control Fc.

When performing a speed change, the dog clutch-type speed change device 50 according to this embodiment performs the dog disengagement by putting the clutch 44 in the disconnected state and, immediately after the dog disengagement is completed, starts the action of connecting the clutch 44.

In more detail, in this embodiment, driving states of the engine 45 when a speed change command is generated include a first driving state that is specified from the state of the speed or the torque of the engine 45 and a second driving state that is specified as a state where the speed or the torque is low compared with that in the first driving state. Specifically, the first driving state is a driving state where the engine 45 has a high speed and a high torque, and the second driving state is a driving state where the engine 45 has a low speed and a low torque. The dog clutch-type speed change device 50 determines in which state the driving state of the engine 45 is, and changes the control form of control of the clutch 44 and torque control of the engine 45 during the speed change according to the determined driving state of the engine 45. In the case where the engine 45 is in the second driving state (low-speed, low-torque state) when the speed change command is generated, during the speed change, the dog clutch-type speed change device 50 performs the dog disengagement by putting the clutch 44 in the disconnected state and, immediately after the dog disengagement is completed, starts the action of connecting the clutch 44. The dog engagement is performed by putting the clutch 44 in the partially connected state. During a period in which the clutch 44 transitions from the fully connected state to the disconnected state or a period in which the clutch 44 is in the disconnected state, the torque of the engine 45 is set to a reduced state, and at a timing after the dog disengagement is completed, an action of increasing the torque of the engine 45 is started. Description of contents of control in the case where the engine 45 is in the first driving state (high-speed, high-torque state) when the speed change command is generated will be omitted. "When the speed change command is generated" means within a predetermined period including the point of generation of the speed change command, such as immediately before the command, the point when the command is generated, or immediately after the command is generated.

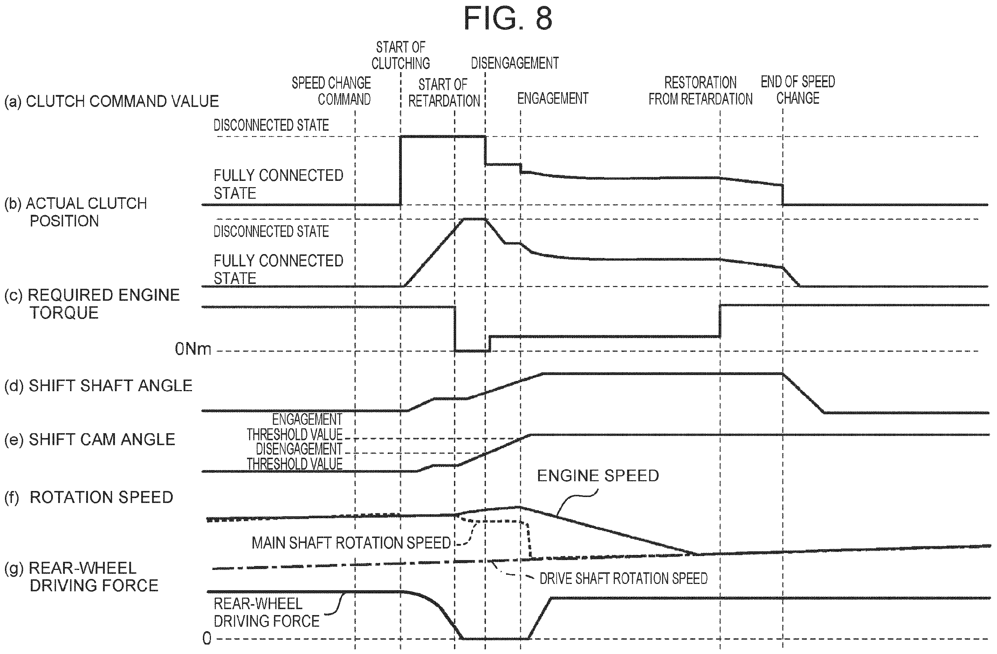

Next, contents of control (first speed change control) by the dog clutch-type speed change device 50 in the case where the driving state of the engine 45 when an upshift command is generated is the second driving state (low-speed, low-torque state) will be described. FIG. 8 is a view showing transitions of the clutch command value, the actual clutch position, the required engine torque, the shift shaft angle, the shift cam angle, the speed of the engine 45, the rotation speed of the main shaft 41, the rotation speed of the drive shaft 42, and the driving force of the rear wheel 23 when a speed change command is generated.

As shown in FIG. 8, in the first speed change control, the dog clutch-type speed change device 50 starts the disconnection control of the clutch 44 after a predetermined time has elapsed since the generation of the speed change command. Specifically, when a speed change command for an upshift is generated as an upshift switch 72a is pressed or by the fully automatic control unit 94, a command value for the clutch switches from the fully connected state to the disconnected state. Thus, the pressure plate 451 is pushed in the rightward direction in FIG. 3 with respect to the axial direction of the main shaft 41, so that the actual clutch position moves gradually from the fully connected state to the disconnected state, and the clutch 44 assumes the disconnected state before the dog disengagement of the first gear 49a from the second gear 49b. When a predetermined time has elapsed since the speed change command has been generated, the control device 90 changes to control that reduces the required engine torque (the torque of the engine 45) to 0 Nm or a value close to 0 Nm during the period in which the clutch 44 transitions from the fully connected state to the disconnected state or the period in which the clutch 44 is in the disconnected state. Thus, the driving force of the rear wheel 23 decreases gradually.

Then, in the shift mechanism 43, switching of the speed change gears is performed. Specifically, the dog disengagement of the first gear 49a from the second gear 49b and the dog engagement thereof with another second gear 49b are performed. Here, the action of connecting the clutch 44 is started immediately after the dog disengagement of the first gear 49a from the second gear 49b is performed. Specifically, the command value for the clutch switches to the partially connected state. Thus, the pressure plate 451 is pushed in the leftward direction in FIG. 3 with respect to the axial direction of the main shaft 41, and the actual clutch position moves gradually from the disconnected state to the partially connected state. Thus, the clutch 44 assumes the partially connected state after the dog disengagement and before the dog engagement. At a timing after the dog disengagement is completed, an action of increasing the torque of the engine 45 is started. Specifically, increase of the required engine torque (the torque of the engine 45) is started. Here, when increase of the required engine torque is started before the dog disengagement, racing of the engine 45 may occur due to the clutch 44 being disconnected. "After the dog disengagement" includes timings immediately after the dog disengagement is performed and after a predetermined time has passed.

Thereafter, the dog engagement of the first gear 49a with the second gear 49b is performed, and when the command value for the clutch switches from the partially connected state to the fully connected state, the pressure plate 451 is further pushed in the leftward direction in FIG. 3 with respect to the axial direction of the main shaft 41, so that the actual clutch position moves gradually from the partially connected state to the fully connected state, and finally the clutch 44 assumes the fully connected state.

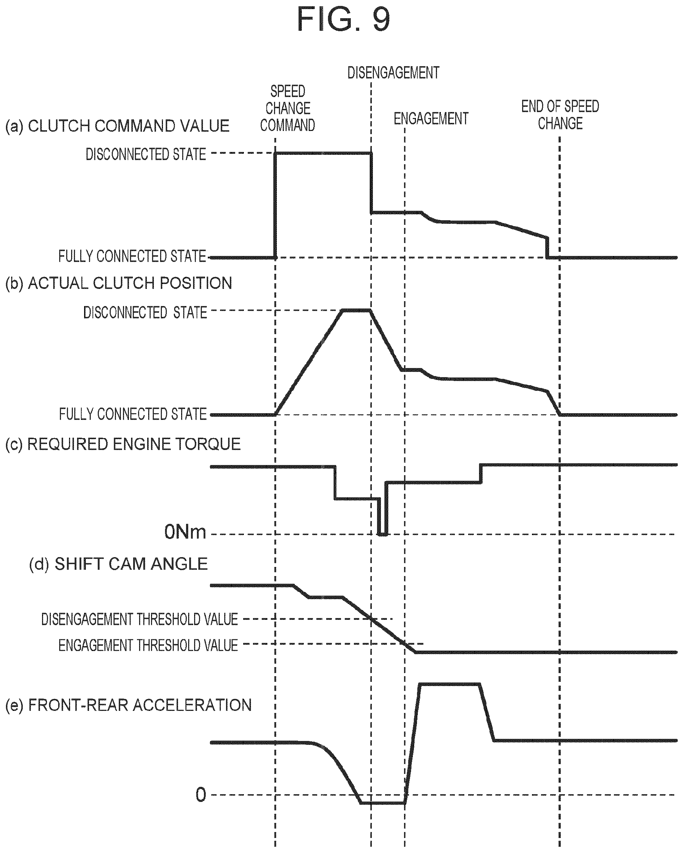

Next, contents of control (second speed change control) by the dog clutch-type speed change device 50 in the case where the driving state of the engine 45 when a downshift command is generated is a third driving state of outputting a positive torque will be described. FIG. 9 is a view showing the clutch command value, the actual clutch position, the required engine torque, the shift cam angle, and a front-rear acceleration in the case where the motive power source 45 is in the state of outputting a positive torque when a speed change command for a downshift is generated. As shown in FIG. 9, in the second speed change control, the dog clutch-type speed change device 50 starts the disconnection control of the clutch 44 at the time when the speed change command is generated, and starts reducing the torque of the engine 45 based on a timing before the clutch 44 assumes the disconnected state as the disconnection control of the clutch 44 is started. The dog clutch-type speed change device 50 puts the clutch 44 in the clutch disconnected state at the time of the dog disengagement, and puts it in the partially connected state immediately after the dog disengagement.

When a speed change command for a downshift is generated as a downshift switch 72b is pressed or by the fully automatic control unit 94, the dog clutch-type speed change device 50 switches the command value for the clutch from the fully connected state to the disconnected state. Thus, the pressure plate 451 is pushed in the rightward direction in FIG. 3 with respect to the axial direction of the main shaft 41, so that the actual clutch position moves gradually from the fully connected state to the disconnected state and reaches the disconnected state before the dog disengagement of the first gear 49a from the second gear 49b. When a predetermined time has elapsed since the speed change command has been generated, the control device 90 reduces the required engine torque (the torque of the engine 45) during the period in which the clutch 44 transitions from the connected state to the disconnected state or the period in which the clutch 44 is in the disconnected state. Thus, the front-rear acceleration of the motorcycle 1 decreases gradually.

Then, switching of the speed change gears is performed in the shift mechanism 43. Specifically, the dog disengagement of the first gear 49a from the second gear 49b and the dog engagement thereof with another second gear 49b are performed. Here, the action of connecting the clutch 44 is started immediately after the disengagement of the first gear 49a from the second gear 49b is performed. Specifically, the command value for the clutch switches to the partially connected state. Thus, the pressure plate 451 is pushed in the leftward direction in FIG. 3 with respect to the axial direction of the main shaft 41, and the actual clutch position moves gradually from the disconnected state to the partially connected state. Thus, the clutch 44 assumes the partially connected state after the dog disengagement and before the dog engagement. After the dog disengagement is completed, increase of the required engine torque (the torque of the engine 45) is started. Thereafter, engagement of the first gear 49a with the second gear 49b is performed. When the command value for the clutch switches from the partially connected state to the fully connected state, the pressure plate 451 is pushed in the leftward direction in FIG. 3 with respect to the axial direction of the main shaft 41, so that the actual clutch position moves gradually from the partially connected state to the fully connected state, and finally the clutch 44 assumes the fully connected state.

According to the dog clutch-type speed change device 50 of this embodiment configured as has been described above, the control device 90 controls the clutch actuator 60 and the shift actuator 70 so as to perform, according to a speed change command for the transmission 48, the action of making the clutch 44 transition from the fully connected state to the disconnected state via the partially connected state, and the dog disengagement of disengaging the driving dog and the driven dog of the current stage of speed from each other, such that the dog disengaging action is completed with the clutch 44 in the disconnected state. According to the speed change control in this embodiment, since the clutch is put in the disconnected state at the time of the dog disengagement, a dog meshing torque disappears and reliable dog disengagement can be performed. In the case where, for example, the driving state of the engine 45 when a speed change command is generated is the second driving state (low-speed, low-torque state), reducing the torque of the engine 45 alone cannot secure a difference in relative rotation speed of the dogs, so that the time of dog contact as shown in FIG. 6 (b) becomes prolonged. In the speed change control of this embodiment, therefore, the clutch 44 is put in the disconnected state at the time of the dog disengagement so as to prevent a decrease in the rotation speed of the main shaft 41 and secure a difference in relative rotation speed of the dogs, thereby reducing the time taken before the dog contact dissolves. Next, the control device 90 controls at least the clutch actuator 60 and the shift actuator 70 so as to shift the clutch 44 from the disconnected state to the partially connected state or the fully connected state while the driving dog and the driven dog of the next stage of speed are caused to be closer to each other from the disengaged state to the engaged state between the point when the dog engaging action of engaging the driving dog and the driven dog with each other is started and the point when the dog engaging action is completed. In this case, at the point when the driving dog and the driven dog are engaged with each other, the torque is transmitted between the engine 45 and the drive shaft through the clutch 44, the main shaft, the driving dog, and the driven dog. According to the speed change control in this embodiment, immediately after the dog disengagement is completed, the action of connecting the clutch 44 is started and the clutch 44 is moved from the connected state to the partially connected state or the fully connected state, so that the driving force can be increased at an early stage from the driving-force-absent state accompanying the speed change. In this embodiment, the start of the dog disengaging action may refer to, for example, the timing of moving the shift cam 421, and the completion of the dog disengaging action may refer to, for example, the timing when the engaging protrusions of the dog have come out of the engaging recesses of the dog (the timing when overlap with each other has disappeared). The start of the dog engaging action may refer to, for example, the timing when the engaging protrusions of the dogs enter the engaging recesses of the dog (the timing when overlap with each other starts), and the completion of the dog engaging action may refer to the timing when the dogs hit and engage with each other in a rotation direction.

The driving states of the engine 45 include the first driving state (high-speed, high-torque state) that is specified from the state of the speed or the torque of the engine 45, and the second driving state (low-speed, low-torque state) that is specified as a state where the speed or the torque is low compared with that in the first driving state. In the dog clutch-type speed change device 50 of this embodiment, in the case where the driving state of the engine 45 when an upshift speed change command is generated is the second driving state (low-speed, low-torque state) or the case where the driving state of the engine 45 when a downshift command is generated is the state of outputting a torque, the control device 90 controls at least the clutch actuator and the shift actuator so as to shift the clutch from the disconnected state to the partially connected state or the fully connected state while the driving dog and the driven dog of the next stage of speed are caused to be closer to each other from the disengaged state to the engaged state between the point when the dog engaging action of engaging the driving dog and the driven dog with each other is started and the point when the dog engaging action is completed. In this case, at the point when the driving dog and the driven dog are engaged with each other, the torque is transmitted between the engine 45 and the drive shaft 42 through the clutch 44, the main shaft 41, the driving dog, and the driven dog.

In the dog clutch-type speed change device 50 of this embodiment, the control device 90 may control at least the clutch actuator 60 and the shift actuator 70 so as to shift the clutch 44 from the disconnected state to the partially connected state, and not to the fully connected state, while the driving dog and the driven dog of the next stage of speed are caused to be closer to each other from the disengaged state to the engaged state between the point when the dog engaging action of engaging the driving dog and the driven dog with each other is started and the point when the dog engaging action is completed. In this case, at the point when the driving dog and the driven dog are engaged with each other, the torque is transmitted between the engine 45 and the drive shaft 42 through the clutch 44, the main shaft 41, the driving dog, and the driven dog. According to the speed change control in this embodiment, since the clutch is put in the partially connected state after the dog disengagement and before the dog engagement, the output of the driving force after completion of the dog engaging action can be controlled.

In the dog clutch-type speed change device 50 of this embodiment, the torque of the engine 45 may be set to a reduced state during the period in which the clutch 44 shifts from the fully connected state to the disconnected state or the period in which the clutch 44 is in the disconnected state, and the action of increasing the torque of the engine 45 may be started at a timing after the dog disengagement is completed.

The dog clutch-type speed change device 50 of this embodiment may further include the motive power source-torque adjustment device 80 that adjusts the torque of the engine 45, and the control device 90 may control at least the clutch actuator 60, the shift actuator 70, and the motive power source-torque adjustment device 80.

In the dog clutch-type speed change device 50 of this embodiment, the control device 90 increases the engine torque between when the dog disengagement is performed and when the dog engagement is performed. The control device 90 may control the motive power source-torque adjustment device 80 such that the engine torque to be increased becomes a positive torque.

In the dog clutch-type speed change device 50 of this embodiment, the control device 90 increases the engine torque between when the dog disengagement is performed and when the dog engagement is performed. The control device 90 may control the motive power source-torque adjustment device 80 such that the engine torque becomes a positive torque lower than the torque that the motive power source 45 outputs when an upshift command is generated or when a downshift command is generated.

The dog clutch-type speed change device 50 according to this embodiment is not limited to the above-described aspect and various changes can be made thereto.

For example, also in the case where the driving state of the engine 45 when a speed change command is generated is the first driving state that is specified as a state where the speed or the torque is high relative to that in the second driving state, the dog clutch-type speed change device 50 may perform the same control as in the case where the clutch 44 is in the fully connected state or the torque of the engine 45 is in the second driving state when a speed change command is generated.

### Reference Signs List

- 1: Motorcycle
- 3: Head pipe
- 4: Steering handlebar
- 5: Rear arm bracket
- 6: Vehicle body frame
- 6a: Frame part
- 10: Front fork
- 12: Front wheel
- 13: Fuel tank
- 14: Seat
- 20: Power unit
- 21: Rear arm
- 22: Pivot shaft
- 23: Rear wheel
- 25: Crankshaft
- 26: Crank case
- 38: Potentiometer
- 39: Potentiometer
- 41: Main shaft
- 42: Drive shaft
- 43: Shift mechanism
- 44: Clutch
- 45: Motive power source, engine
- 47: Power transmission mechanism
- 48: Transmission
- 49: Speed change gear
- 49a: First gear
- 49b: Second gear
- 49c: Engaging protrusion
- 49d: Groove
- 49e: Engaging recess
- 49f: Axial end surface
- 49g: Insertion hole
- 49h: Insertion hole
- 50: Dog clutch-type speed change device
- 60: Clutch actuator
- 61: Intake pipe
- 62: Exhaust pipe
- 63: Accelerator
- 65: Throttle valve
- 66: Fuel supply device
- 67: Ignition device
- 70: Shift actuator
- 71: Control selection switch
- 72: Shift switch
- 72a: Upshift switch
- 72b: Downshift switch
- 73: Power source device
- 74: Main switch
- 75: Shift rod
- 80: Motive power source-torque adjustment device
- 90: Control device
- 91: Switching determination unit
- 92: Driving state detection unit
- 93: Semi-automatic control unit
- 94: Fully automatic control unit
- 310: Gear
- 420: Speed change gear
- 421: Shift cam
- 421a: Cam groove
- 422: Shift fork
- 441: Gear
- 442: Plate group
- 443: Clutch housing
- 445: Friction plate
- 447: Clutch boss
- 449: Clutch plate
- 450: Spring
- 451: Pressure plate
- 451B: Pressing part
- 455: Push rod
- 457: Bearing
- 459: Ball
- 461: Push rod
- 461A: One end portion
- 463: Piston
- 465: Cylinder main body
- 467: Space

## Claims

1. A dog clutch-type speed change device (50) comprising:
a clutch (44) that is configured to, in a fully connected state, transmit a torque from a motive power source (45) to a main shaft (41) as a clutch friction member is pressed, in a partially connected state, transmit the torque as the clutch friction member is pressed with a pressing force lower than a pressing force in the fully connected state, and in a disconnected state, interrupt the torque transmission from the motive power source (45) to the main shaft (41);
a clutch actuator (60) that is configured to control the clutch (44);
a transmission (48)that is configured to perform a speed change by causing a driving dog and a driven dog to be closer to and to be apart from each other so as to engage and disengage the driving dog and the driven dog with and from each other and thus switching gears that are configured to transmit a driving force between the main shaft (41) and a drive shaft (42);
a shift actuator (70) that is configured to perform a speed change of the transmission (48); and
a control device (90) that is configured to control the clutch actuator (60) and the shift actuator (70), **characterized in that**
the control device (90) is configured to control the clutch actuator (60) and the shift actuator (70) so as to perform, according to a speed change command for the transmission, an action of making the clutch transition from the fully connected state to the disconnected state via the partially connected state, and a dog disengaging action of disengaging the driving dog and the driven dog of a current stage of speed from each other, such that the dog disengaging action is completed with the clutch (44) in the disconnected state, and control the clutch actuator (60) and the shift actuator (70) so as to shift the clutch (44) from the disconnected state to the partially connected state or the fully connected state while the driving dog and the driven dog of a next stage of speed are caused to be closer to each other from a disengaged state to an engaged state between a point when a dog engaging action of engaging the driving dog and the driven dog with each other is started and a point when the dog engaging action is completed, such that, at a point when the driving dog and the driven dog are engaged with each other, the torque is transmitted between the motive power source (45) and the drive shaft (42) through the clutch (44), the main shaft (41), the driving dog, and the driven dog.

2. The dog clutch-type speed change device (50) according to claim 1, wherein the control device (90) is configured to control at least the clutch actuator (60) and the shift actuator (70) so as to shift the clutch from the disconnected state to the partially connected state, and not to the fully connected state, while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source (45) and the drive shaft (42) through the clutch (44), the main shaft (41), the driving dog, and the driven dog.

3. The dog clutch-type speed change device (50) according to claim 1 or 2, wherein
when driving states of the motive power source (45) are defined as a high-speed, high-torque state in which a speed or an output torque of the motive power source (45) is high, and a low-speed, low-torque state in which the speed or the torque is low compared with that in the high-speed, high-torque state,
in a case where the driving state of the motive power source (45) when an upshift command is generated is the low-speed, low-torque state or a case where the driving state of the motive power source when a downshift command is generated is a state of outputting a positive torque, the control device (90) is configured to control at least the clutch actuator (60) and the shift actuator (70) so as to shift the clutch (44) from the disconnected state to the partially connected state or the fully connected state while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source (45) and the drive shaft (42) through the clutch (44), the main shaft (41), the driving dog, and the driven dog.

4. The dog clutch-type speed change device (50) according to claim 3, further comprising a motive power source-torque adjustment device (80) that is configured to adjust the torque of the motive power source (45) during a speed change, wherein the control device (90) is configured to control at least the clutch actuator (60), the shift actuator (70), and the motive power source-torque adjustment device (80).

5. The dog clutch-type speed change device (50) according to claim 4, wherein the control device is configured to control the motive power source-torque adjustment device (80) such that the motive power source (45) outputs a positive torque while the driving dog and the driven dog of the next stage of speed are caused to be closer to each other from the disengaged state to the engaged state between the point when the dog engaging action of engaging the driving dog and the driven dog with each other is started and the point when the dog engaging action is completed, such that, at the point when the driving dog and the driven dog are engaged with each other, the torque is transmitted between the motive power source (45) and the drive shaft (42) through the clutch (44), the main shaft (41), the driving dog, and the driven dog.

6. The dog clutch-type speed change device (50) according to claim 5, wherein the control device (90) is configured to control the motive power source-torque adjustment device (80) such that the torque that the motive power source (45) outputs becomes a positive torque that is lower than the torque that the motive power source (45) outputs when the upshift command is generated or when the downshift command is generated.

## Patentansprüche

1. Eine Gangwechselvorrichtung vom Klauenkupplungstyp (50), die folgende Merkmale aufweist:
eine Kupplung (44), die dazu konfiguriert ist, in einem vollständig verbundenen Zustand ein Drehmoment von einer Bewegungsleistungsquelle (45) an eine Hauptwelle (41) zu übertragen, während ein Kupplungsreibungsbauglied gedrückt wird, in einem teilweise verbundenen Zustand das Drehmoment zu übertragen, während das Kupplungsreibungsbauglied mit einer Druckkraft gedrückt wird, die niedriger als eine Druckkraft in einem vollständig verbundenem Zustand ist, und in einem getrennten Zustand die Drehmomentübertragung von der Bewegungsleistungsquelle (45) an die Hauptwelle (41) zu unterbrechen;
einen Kupplungsaktor (60), der dazu konfiguriert ist, die Kupplung (44) zu steuern;
ein Getriebe (48), das dazu konfiguriert ist, einen Gangwechsel durchzuführen, indem bewirkt wird, dass eine Antriebsklaue und eine angetriebene Klaue sich einander nähern und sich voneinander entfernen, um die Antriebsklaue und die angetriebene Klaue miteinander in Eingriff zu bringen und voneinander zu lösen und somit Getrieberäder zu wechseln, die dazu konfiguriert sind, eine Antriebskraft zwischen der Hauptwelle (41) und einer Antriebswelle (42) zu übertragen;
einen Schaltaktor (70), der dazu konfiguriert ist, einen Gangwechsel des Getriebes (48) durchzuführen; und
eine Steuervorrichtung (90), die dazu konfiguriert ist, den Kupplungsaktor (60) und den Schaltaktor (70) zu steuern, **dadurch gekennzeichnet, dass**
die Steuervorrichtung (90) ist dazu konfiguriert, den Kupplungsaktor (60) und den Schaltaktor (70) zu steuern, um gemäß einem Gangwechselbefehls für das Getriebe eine Aktion, bei der die Kupplung von dem vollständig verbundenen Zustand über den teilweise verbundenen Zustand zu dem getrennten Zustand übergeht, und eine klauenlösende Aktion durchzuführen, bei der die Antriebsklaue und die angetriebene Klaue einer aktuellen Gangstufe voneinander gelöst werden, derart, dass die klauenlösende Aktion mit der Kupplung (44) im getrennten Zustand abgeschlossen wird, und den Kupplungsaktor (60) und den Schaltaktor (70) zu steuern, um die Kupplung (44) von dem getrennten Zustand zu dem teilweise verbundenen Zustand oder zu dem vollständig verbundenen Zustand zu schalten, während bewirkt wird, dass die Antriebsklaue und die angetriebene Klaue einer nächsten Gangstufe einander näher sind, von einem gelösten Zustand zu einem in Eingriff gebrachten Zustand zwischen einem Punkt, wenn eine klauenineingriffbringende Aktion, bei der die Antriebsklaue und die angetriebene Klaue miteinander in Eingriff gebracht werden, gestartet ist und einem Punkt, wenn die klauenineingriffbringende Aktion abgeschlossen ist, derart, dass bei einem Punkt, wenn die Antriebsklaue und die angetriebene Klaue miteinander in Eingriff gebracht sind, das Drehmoment zwischen der Bewegungsleistungsquelle (45) und der Antriebswelle (42) durch die Kupplung (44), die Hauptwelle (41), die Antriebsklaue und die angetriebenen Klaue übertragen wird.

2. Die Gangwechselvorrichtung vom Klauenkupplungstyp (50) gemäß Anspruch 1, wobei die Steuervorrichtung (90) dazu konfiguriert ist, zumindest den Kupplungsaktor (60) und den Schaltaktor (70) zu steuern, um die Kupplung von dem getrennten Zustand zu dem teilweise verbundenen Zustand und nicht zu dem vollständig verbundenen Zustand zu schalten, während bewirkt wird, dass die Antriebsklaue und die angetriebene Klaue der nächsten Gangstufe einander näher sind, von dem gelösten Zustand zu dem in Eingriff gebrachten Zustand zwischen dem Punkt, wenn die klauenineingriffbringende Aktion, bei der die Antriebsklaue und die angetriebene Klaue miteinander in Eingriff gebracht werden, gestartet ist und dem Punkt, wenn die klauenineingriffbringende Aktion abgeschlossen ist, derart, dass bei dem Punkt, wenn die Antriebsklaue und die angetriebene Klaue miteinander in Eingriff gebracht sind, das Drehmoment zwischen der Bewegungsleistungsquelle (45) und der Antriebswelle (42) durch die Kupplung (44), die Hauptwelle (41), die Antriebsklaue und die angetriebenen Klaue übertragen wird.

3. Die Gangwechselvorrichtung vom Klauenkupplungstyp (50) gemäß Anspruch 1 oder 2, wobei
wenn Antriebszustände der Bewegungsleistungsquelle (45) als ein Zustand mit hoher Geschwindigkeit und hohem Drehmoment, in welchem eine Geschwindigkeit oder ein Abtriebsdrehmoment der Bewegungsleistungsquelle (45) hoch ist, und ein Zustand mit niedriger Geschwindigkeit und niedrigem Drehmoment definiert sind, in welchem die Geschwindigkeit oder das Drehmoment verglichen mit dem Zustand mit hoher Geschwindigkeit und hohem Drehmoment niedrig ist,
in einem Fall, bei dem der Antriebszustand der Bewegungsleistungsquelle (45), wenn ein Aufwärtsschaltbefehl generiert wird, der Zustand mit niedriger Geschwindigkeit und niedrigem Drehmoment ist oder in einem Fall, bei dem der Antriebszustand der Bewegungsleistungsquelle, wenn ein Abwärtsschaltbefehl generiert wird, ein Zustand ist, bei dem ein positives Drehmoment erzeugt wird, das Steuerelement (90) dazu konfiguriert ist, zumindest den Kupplungsaktor (60) und den Schaltaktor (70) zu steuern, um die Kupplung (44) von dem getrennten Zustand zu dem teilweise verbundenen Zustand oder zu dem vollständig verbundenen Zustand zu schalten, während bewirkt wird, dass die Antriebsklaue und die angetriebene Klaue der nächsten Gangstufe einander näher sind, von dem gelösten Zustand zu dem in Eingriff gebrachten Zustand zwischen dem Punkt, wenn die klauenineingriffbringende Aktion, bei der die Antriebsklaue und die angetriebene Klaue miteinander in Eingriff gebracht werden, gestartet ist und dem Punkt, wenn die klauenineingriffbringende Aktion abgeschlossen ist, derart, dass bei dem Punkt, wenn die Antriebsklaue und die angetriebene Klaue miteinander in Eingriff gebracht sind, das Drehmoment zwischen der Bewegungsleistungsquelle (45) und der Antriebswelle (42) durch die Kupplung (44), die Hauptwelle (41), die Antriebsklaue und die angetriebenen Klaue übertragen wird.

4. Die Gangwechselvorrichtung vom Klauenkupplungstyp (50) gemäß Anspruch 3, welche ferner eine Bewegungsleistungsquellen-Drehmomenteinstellungsvorrichtung (80) aufweist, die dazu konfiguriert ist, das Drehmoment der Bewegungsleistungsquelle (45) während eines Gangwechsels einzustellen, wobei eine Steuervorrichtung (90) dazu konfiguriert ist, zumindest den Kupplungsaktor (60), den Schaltaktor (70) und die Bewegungsleistungsquellen-Drehmomenteinstellungsvorrichtung (80) zu steuern.

5. Die Gangwechselvorrichtung vom Klauenkupplungstyp (50) gemäß Anspruch 4, wobei die Steuervorrichtung dazu konfiguriert ist, die Bewegungsleistungsquellen-Drehmomenteinstellungsvorrichtung (80) zu steuern, derart, dass die Bewegungsleistungsvorrichtung (45) einen positiven Drehmoment erzeugt, während bewirkt wird, dass die Antriebsklaue und die angetriebene Klaue der nächsten Gangstufe einander näher sind, von dem gelösten Zustand zu dem in Eingriff gebrachten Zustand zwischen dem Punkt, wenn die klauenineingriffbringende Aktion, bei der die Antriebsklaue und die angetriebene Klaue miteinander in Eingriff gebracht werden, gestartet ist und dem Punkt, wenn die klauenineingriffbringende Aktion abgeschlossen ist, derart, dass bei dem Punkt, wenn die Antriebsklaue und die angetriebene Klaue miteinander in Eingriff gebracht sind, das Drehmoment zwischen der Bewegungsleistungsquelle (45) und der Antriebswelle (42) durch die Kupplung (44), die Hauptwelle (41), die Antriebsklaue und die angetriebenen Klaue übertragen wird.

6. Die Gangwechselvorrichtung vom Klauenkupplungstyp (50) gemäß Anspruch 5, wobei die Steuervorrichtung (90) dazu konfiguriert ist, die Bewegungsleistungsquellen-Drehmomenteinstellungsvorrichtung (80) derart zu steuern, dass das Drehmoment, das von der Bewegungsleistungsquelle (45) erzeugt wird, zu einem positiven Drehmoment wird, das niedriger ist als das Drehmoment, das von der Bewegungsleistungsquelle (45) erzeugt wird, wenn der Aufwärtsschaltbefehl generiert wird oder wenn der Abwärtsschaltbefehl generiert wird.

## Revendications

1. Dispositif de changement de vitesse à embrayage à crabots (50) comprenant :
un embrayage (44) qui est configuré pour, dans un état complètement connecté, transmettre un couple depuis une source de puissance motrice (45) vers un arbre principal (41) lorsqu'un élément de friction d'embrayage est pressé, dans un état partiellement connecté, transmettre le couple lorsque l'élément de friction d'embrayage est pressé avec une force de pression inférieure à une force de pression à l'état complètement connecté, et dans un état déconnecté, interrompre la transmission du couple depuis la source de puissance motrice (45) vers l'arbre principal (41) ;
un actionneur d'embrayage (60) qui est configuré pour commander l'embrayage (44) ;
une transmission (48) qui est configurée pour effectuer un changement de vitesse en rapprochant et en éloignant un crabot d'entraînement et un crabot entraîné l'un de l'autre afin d'engager et de désengager le crabot d'entraînement et le crabot entraîné l'un avec l'autre et l'un de l'autre, et ainsi changer les vitesses qui sont configurées pour transmettre une force d'entraînement entre l'arbre principal (41) et un arbre d'entraînement (42) ;
un actionneur de changement de vitesse (70) qui est configuré pour effectuer un changement de vitesse de la transmission (48) ; et
un dispositif de commande (90) qui est configuré pour commander l'actionneur d'embrayage (60) et l'actionneur de changement de vitesse (70), **caractérisé en ce que**
le dispositif de commande (90) est configuré pour commander l'actionneur d'embrayage (60) et l'actionneur de changement de vitesse (70) de manière à effectuer, conformément à une commande de changement de vitesse pour la transmission, une action consistant à faire passer l'embrayage de l'état complètement connecté à l'état déconnecté via l'état partiellement connecté, et une action de désengagement du crabot consistant à désengager le crabot d'entraînement et le crabot entraîné d'un étage de vitesse actuel l'un de l'autre, de telle sorte que l'action de désengagement du crabot soit achevée avec l'embrayage (44) à l'état déconnecté, et à commander l'actionneur d'embrayage (60) et l'actionneur de changement de vitesse (70) de manière à faire passer l'embrayage (44) de l'état désengagé à l'état partiellement engagé ou à l'état complètement engagé, tandis que le crabot d'entraînement et le crabot entraîné d'un étage de vitesse suivant sont amenés à se rapprocher l'un de l'autre, passant d'un état désengagé à un état engagé, entre le moment où une action d'engagement du crabot consistant à engager le crabot d'entraînement et le crabot entraîné l'un avec l'autre est lancée et le moment où l'action d'engagement du crabot est terminée, de telle sorte que, au moment où le crabot d'entraînement et le crabot entraîné s'engagent l'un avec l'autre, le couple est transmis entre la source d'énergie motrice (45) et l'arbre d'entraînement (42) par l'intermédiaire de l'embrayage (44), de l'arbre principal (41), du crabot d'entraînement et du crabot entraîné.

2. Dispositif de changement de vitesse à embrayage à crabots (50) selon la revendication 1, dans lequel le dispositif de commande (90) est configuré pour commander au moins l'actionneur d'embrayage (60) et l'actionneur de changement de vitesse (70) de manière à faire passer l'embrayage de l'état désengagé à l'état partiellement engagé, et non à l'état complètement engagé, tandis que le crabot d'entraînement et le crabot entraîné de l'étage de vitesse suivant sont amenés à se rapprocher l'un de l'autre de l'état désengagé à l'état engagé entre le moment où l'action d'engagement du crabot consistant à engager le crabot d'entraînement et le crabot entraîné l'un avec l'autre est commencée et le moment où l'action d'engagement du crabot est terminée, de telle sorte que, au moment où le crabot d'entraînement et le crabot entraîné s'engagent l'un avec l'autre, le couple est transmis entre la source d'énergie motrice (45) et l'arbre d'entraînement (42) par l'intermédiaire de l'embrayage (44), de l'arbre principal (41), du crabot d'entraînement et du crabot entraîné.

3. Dispositif de changement de vitesse à embrayage à crabots (50) selon la revendication 1 ou 2, dans lequel
lorsque les états d'entraînement de la source d'énergie motrice (45) sont définis comme un état à vitesse élevée et couple élevé dans lequel la vitesse ou le couple de sortie de la source d'énergie motrice (45) est élevé, et un état à vitesse faible et couple faible dans lequel la vitesse ou le couple est faible par rapport à celui de l'état à vitesse élevée et couple élevé,
dans le cas où l'état d'entraînement de la source d'énergie motrice (45) lorsqu'une commande de passage à la vitesse supérieure est générée est l'état à faible vitesse et faible couple, ou dans le cas où l'état d'entraînement de la source d'énergie motrice lorsqu'une commande de passage à la vitesse inférieure est générée est un état de production d'un couple positif, le dispositif de commande (90) est configuré pour commander au moins l'actionneur d'embrayage (60) et l'actionneur de changement de vitesse (70) de manière à faire passer l'embrayage (44) de l'état désengagé à l'état partiellement engagé ou à l'état complètement engagé, tandis que le crabot d'entraînement et le crabot entraîné de l'étage de vitesse suivant sont rapprochés l'un de l'autre de l'état désengagé à l'état engagé entre le moment où l'action d'engagement du crabot consistant à engager le crabot d'entraînement et le crabot entraîné l'un avec l'autre est commencée et le moment où l'action d'engagement du crabot est terminée, de telle sorte que, au moment où le crabot d'entraînement et le crabot entraîné s'engagent l'un avec l'autre, le couple soit transmis entre la source de puissance motrice (45) et l'arbre d'entraînement (42) par l'intermédiaire de l'embrayage (44), de l'arbre principal (41), du crabot d'entraînement et du crabot entraîné.

4. Dispositif de changement de vitesse à embrayage à crabots (50) selon la revendication 3, comprenant en outre un dispositif de réglage du couple de la source d'énergie motrice (80) qui est configuré pour régler le couple de la source d'énergie motrice (45) pendant un changement de vitesse, dans lequel le dispositif de commande (90) est configuré pour commander au moins l'actionneur d'embrayage (60), l'actionneur de changement de vitesse (70) et le dispositif de réglage du couple de la source d'énergie motrice (80).

5. Dispositif de changement de vitesse à embrayage à crabots (50) selon la revendication 4, dans lequel le dispositif de commande est configuré pour commander le dispositif de réglage du couple de la source d'énergie motrice (80) de telle sorte que la source d'énergie motrice (45) produit un couple positif tandis que le crabot d'entraînement et le crabot entraîné de l'étage de vitesse suivant sont amenés à se rapprocher l'un de l'autre de l'état désengagé à l'état engagé entre le moment où l'action d'engagement du crabot consistant à engager le crabot d'entraînement et le crabot entraîné l'un avec l'autre est commencée et le moment où l'action d'engagement des crabots est terminée, de telle sorte qu'au moment où le crabot d'entraînement et le crabot entraîné sont engagés l'un avec l'autre, le couple est transmis entre la source d'énergie motrice (45) et l'arbre d'entraînement (42) par l'intermédiaire de l'embrayage (44), de l'arbre principal (41), du crabot d'entraînement et du crabot entraîné.

6. Dispositif de changement de vitesse à embrayage à crabots (50) selon la revendication 5, dans lequel le dispositif de commande (90) est configuré pour commander le dispositif de réglage du couple de la source d'énergie motrice (80) de telle sorte que le couple délivré par la source d'énergie motrice (45) devienne un couple positif inférieur au couple délivré par la source d'énergie motrice (45) lorsqu'une commande de passage à la vitesse supérieure est générée ou lorsqu'une commande de passage à la vitesse inférieure est générée.
